# EUROPEAN PATENT APPLICATION

(11) **EP 4 195 381 A1**
(43) Date of publication of application: **14.06.2023**
(21) Application number: 21214122.0
(22) Date of filing: 13.12.2021
(51) Int. Cl.: H01M 50/209, H01M 50/291, H01M 50/293

(54) **SPACER FOR SPACING BATTERY CELLS FROM EACH OTHER IN A BATTERY CELLS STACK**

(71) Applicant: Samsung SDI Co., Ltd., Yongin-si, Gyeonggi-do 17084 (KR)
(72) Inventor: Hadler, Bernhard, 8073 Feldkirchen/Graz (AT); Nemes, Marton, 8054 Seiersberg (AT)
(74) Representative: Gulde & Partner

(57) **Abstract**

The present disclosure refers to a spacer for spacing battery cells from each other in a battery cells stack. The spacer comprises:
- a base plate comprising a first side and a second side opposed to the first side;
- a plurality of first protrusions protruding from a plane of the base plate at the first side, wherein each of the first protrusions coincides with a depression on the second side; and
- a plurality of second protrusions protruding from the plane of the base plate at the second side, wherein each of the second protrusions coincides with a depression on the first side.

Each of the first protrusions directly surrounds one corresponding second protrusion.

## Description

### Field of the Disclosure

The present disclosure relates to a spacer for spacing battery cells from each other in a battery cells stack. Another aspect of the present disclosure refers to a battery cells stack for an electric vehicle including the spacer.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator or a hydrogen fuel power cell. Furthermore, the vehicle may include a combination of an electric motor and conventional combustion engine. In general, an electric-vehicle battery, EVB, or traction battery is a battery used to power the propulsion of battery electric vehicles, BEVs. Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as a power supply for small electronic devices, such as cellular phones, notebook computers and camcorders, while high-capacity rechargeable batteries are used as a power supply for electric and hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy content, in particular for motor driving of a hybrid vehicle. That is, the battery module is formed by interconnecting the electrode terminals of the plurality of unit battery cells depending on a required amount of power and in order to realize a high-power rechargeable battery.

Battery modules can be constructed either in block design or in modular design. In block designs each battery is coupled to a common current collector structure and a common battery management system and the unit thereof is arranged in a housing. In modular designs, pluralities of battery cells are connected to form submodules and several submodules are connected to form the battery module. In automotive applications, battery systems often consist of a plurality of battery modules connected in series for providing a desired voltage. Therein, the battery modules may comprise submodules with a plurality of stacked battery cells, each stack comprising cells connected in parallel that are connected in series (*XpYs*) or multiple cells connected in series that are connected in parallel (*XsYp*).

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

As mentioned above, the shape of the battery cell case may be rectangular (or prismatic) and a plurality of battery cells may be stacked together with their longitudinal sides resting against each other and thereby forming a battery cells stack. Secondary battery cells can swell due to many reasons. For example, overcharge conditions may accelerate parasitic reactions between the electrodes and electrolyte with release of gases, excessive temperatures may lead to a thermal expansion, or deep discharge of battery cells may lead to gas formation. Swelling of a failed battery cells may result in high mechanical pressure being exerted on adjacent battery cells, which may damage them. Furthermore, swelling may be caused by a temperature increase within the failed battery cell and since the cases are usually formed by a thermal conductive material, the heat may be easily transferred to neighboring battery cells. However, this poses a significant safety risk and may lead to a thermal runaway. In general, thermal runaway describes a process that is accelerated by increased temperature, in turn releasing energy that further increases temperature. Thermal runaway occurs in situations where an increase in temperature changes the conditions in a way that causes a further increase in temperature, often leading to a destructive result. For example, when a cell is heated above a critical temperature (typically above 150°C) it can transit into a thermal runaway.

For avoiding the before mentioned risks caused by swelling of the battery cells and heat transfer, the single battery cells are spaced form each other in the battery cells stack. In particular, spacers are assembled between neighboring battery cells. In general, the spacers are configured to compensate the swelling of battery cells. Another important function of the spacer is to electrically insulate the battery cells from each other so as to avoid current flow between the battery cells in case of a defect. Such spacers may be realized in multiple shapes. For example, the spacer may be a sheet made of a flexible and electrically non-conductive material which is pressed together when the battery cells expand and returns to its original shape when the volume of the battery cells decreases again. However, such a flexible sheet will have a large contact area to the longitudinal sides of the neighboring battery cells which may cause significant heat transfer between the battery cells. Furthermore, an active cooling of the longitudinal sides of the battery cells cannot be established.

WO 2017/055158 A1 discloses a spacer including an elastic member plate (e.g., a single-thickness sheet) which serves as a compression spring inside a battery cells stack and is stacked between prismatic battery cells. The elastic member includes a first longitudinal side, and a second longitudinal side that is opposed to the first longitudinal side. The elastic member further includes first protruding regions that protrude outwardly from the first longitudinal side and coincide with a depression formed in the second longitudinal side. Similarly, second protruding regions protrude outwardly from the second longitudinal side and coincide with a depression formed in the first longitudinal side. The elastic member may be formed of a metal or elastomer.

US 2005/0287426 A1 discloses another exemplary spacer including a plate disposed between prismatic battery cells of a battery cells stack. The spacer shall in particular facilitate air cooling. The spacer includes a large number of protrusions, which protrude from a first longitudinal side of the plate and have a hollowed-out inside groove. When the plate is disposed between the battery cells, the front ends of the protrusions and a second longitudinal side of the plate are contacted by adjacent battery cells. The plate may be formed by a press process or injection process and the strength characteristic of the protrusions is set by the angle at which the protrusion emerges from the plate.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, there is provided a spacer for spacing battery cells from each other in a battery cells stack as defined in claim 1. The spacer comprises:
- a base plate comprising a first side and a second side opposed to the first side;
- a plurality of first protrusions protruding from a plane of the base plate at the first side, wherein each of the first protrusions coincides with a depression on the second side; and
- a plurality of second protrusions protruding from the plane of the base plate at the second side, wherein each of the second protrusions coincides with a depression on the first side.

Each of the first protrusions directly surrounds one corresponding second protrusion.

According to another aspect of the present disclosure, there is provides a battery cells stack for an electric vehicle comprising a plurality of prismatic battery cells, and at least one spacer as defined above. The spacer being interposed between two battery cells of the battery cells stack.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic side view on a battery cells stack according to an embodiment.
- Fig. 2: illustrates an exemplary embodiment of a spacer.
- Fig. 3: schematically illustrates a cross-sectional view through a part of the spacer bearing a spacer element according to an embodiment.
- Fig. 4: schematically illustrates a cross-sectional view through a part of the spacer bearing a spacer element according to another embodiment.
- Fig. 5: illustrates a spacer element according to an embodiment of the present disclosure.

### Detailed Description of the Invention

Reference will now be made in detail to an embodiment which is illustrated in the accompanying drawings. Effects and features of the exemplary embodiment will be described with reference to the accompanying drawings. In the drawings, like reference numerals denote like elements, and redundant descriptions are omitted. The present disclosure, however, may be embodied in various different forms, and should not be construed as being limited to only the illustrated embodiment herein. Rather, this embodiment is provided as example so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, there is provided a spacer for spacing battery cells from each other in a battery cells stack. The spacer comprises:
- a base plate comprising a first side and a second side opposed to the first side;
- a plurality of first protrusions protruding from a plane of the base plate at the first side, wherein each of the first protrusions coincides with a depression on the second side; and
- a plurality of second protrusions protruding from the plane of the base plate at the second side, wherein each of the second protrusions coincides with a depression on the first side.

Each of the first protrusions directly surrounds one corresponding second protrusion.

In other words, battery packs for electric vehicles include one or more battery modules. Each of the battery modules comprises at least one battery cells stack. The battery cells stack is composed of a number of prismatic (or rectangular) battery cells which are aligned with their longitudinal sides resting against each other. Between at least two of the battery cells a spacer is positioned, i.e. the spacer contacts the side surfaces of two neighboring battery cells.

The spacer comprises a base plate. Usually the dimensions of the spacer and of the battery cells are matched. For example, the base plate may have the same length and width as the longitudinal sides of the battery cell. The base plate may thus cover the total surface of a longitudinal side of a battery cell. However, the length and/or width of the base plate may also be smaller or larger than the length and/or width of the longitudinal side of the battery cell.

The spacer further includes a plurality of first protrusions protruding from a plane of the base plate at the first side, wherein each of the first protrusions coincides with a depression on the second side, and a plurality of second protrusions protruding from the plane of the base plate at the second side, wherein each of the second protrusions coincides with a depression on the first side. In other words, on both side surfaces of the base plate protrusions (or bumps) extend out of the plane of the base plate towards the side surfaces of the battery cells. The protrusions are hollow, i.e. they do not insist on material which is additionally attached or applied to the base plate. Rather the protrusions form a kind of cavity. For example, the protrusions may be formed by stamping or pressing into a flat base plate using conventional processing equipment and techniques. Since there are protrusions on both sides of the base plate, the base plate is distanced from the side surfaces of the battery cells in the battery cells stack and only the outer ends of the (first and second) protrusions will contact the side surfaces of the battery cells. A combination of one first protrusion and one second protrusion thus forms a spacer element extending on both sides of the base plate.

Furthermore, each of the first protrusions directly surrounds one corresponding second protrusion. In other words, the second protrusion is positioned inside the first protrusion. Consequently, the first protrusion forms a circumferential hollow bead (or ridge or bulge) of circular or polygonal shape (or simply referred in the following as ring-shaped protrusion) and the second protrusion is arranged in the area encompassed by the hollow bead. The second protrusion immediately follows the first protrusion, i.e. there are no areas between the first protrusion and the second protrusion, which extend flat in the plane of the plate. Thus, the inner wall of the first protrusion goes directly into the surrounding wall of the second protrusion. The second protrusion has the shape of a hollow dimple (or simply referred in the following as dimple-shaped protrusion). Therefore, the raised contours of the combined first and second protrusion form a kind of the spacer element which extends on both sides of the base plate.

State of the art cell spacers provide only little thermal insulation in case of a thermal event. As thermal propagation requirements are becoming more stringent, cell spacers will need a better thermal insulation performance. The above-mentioned spacer design shows an improved thermal insulating behavior. This is because only the ends of the first and second protrusions are directly in contact with the side surfaces of the battery cells in the battery cells stack. Consequently, a possible path for heat flow from an overheated battery cell through the spacer towards a neighboring battery cell is extended and the total contact area is greatly reduced. Specifically, the risk of extending thermal runaway of a single battery cell throughout neighboring battery cells is significantly reduced and the safety of the battery module including the battery cells stack is improved. Furthermore, the first and second protrusions create an air gap on both sides of the base plate, which may be used for active cooling the battery cells by means of for example a flow of a gaseous coolant.

Furthermore, due to the very specific contour of the first and second protrusion, the spacer may compensate swelling of the battery cells. This is because the raised contours of the first and second protrusions form a spacer element which can be elastically deformed like a spring when under load, i.e. will be compressed. As soon as the mechanical stress due to swelling of the battery cells eases off again, the original shape of the spacer element is resumed. The number of spacer elements and their arrangement pattern may be defined by the maximum allowed swelling force, which one battery cell shall transfer to an adjacent battery cell.

The manufacturing process for forming the spacer may be very simple, for example using a conventional pressing equipment which imprints the two protrusions into a previously smooth base plate. In addition, the weight of the spacer can be reduced compared to conventional spacers saving material costs and reducing the total weight of the battery modules.

According to one embodiment, the first protrusions and the second protrusions have a circular shape. Swelling forces will be distributed very evenly so that non-elastic deformation can be avoided. Furthermore, the manufacturing process is simplified. Specifically, the first protrusions may have a diameter in the range of 8 to 15 mm. In addition or separately thereof, the second protrusions may have a diameter in the range of 5 to 10 mm. The first protrusions and the second protrusions may protrude out of the plane of the base plate by 0.5 to 2 mm. Further, the base plate may have a thickness in the range of 0.1 to 1.2 mm. It has been found that the manufacturing process can be made particularly simple and reliable if the dimensions of the protrusions and the base plate are kept in the mentioned ranges. Furthermore, the spring properties of the spacer element meet the usual swelling requirements for battery cells which are used for electric vehicle propulsion.

According to another embodiment, which may be combined with one or more of the before mentioned embodiments, the first protrusions and the second protrusions are integrally formed within the base plate. In other words, the first and second protrusions and the base plate form a single piece composed of the very same material. This may facilitate the manufacturing process.

According to another embodiment, which may be combined with one or more of the before mentioned embodiments, the base plate is formed of an electrically non-conductive material. If the base plate is formed of an electrically non-conductive material, adjacent battery cells will also be effectively electrically isolated against each other. Specifically, the base plate may be formed of a fiber-reinforced polymer composite or may be a mica plate. A fiber-reinforced polymer composite is defined as a polymer that is reinforced with fiber. It represents a class of materials that fall into a category referred to as composite materials. Composite materials are made by dispersing particles of one or more materials in another material, which forms a continuous network around them. Carbon, glass, and aramid are three major types of fibers which are used in construction. The matrix should transfer forces between the fibers and protect the fibers form detrimental effects. Thermosetting resins (thermosets) are usually used. Vinylester and epoxy resins are the most common matrices. The composite may be, for example, a glass-fiber reinforced polymer composite (GFRP), a carbon-fiber reinforced polymer composite (CFRP), or an aramid-fiber reinforced polymer composite (AFRP). In particular, the high energy absorption of AFRP composites makes them suitable for strengthening the spacer elements subjected to dynamic and impact loading. Mica plates are also composite materials and withstand high temperatures, have a high dielectric strength and resistance, and show a high resistance to sudden changes in temperature. In mica plates, the mineral mica is embedded into a polymer matrix, such as thermosetting resins. The mineral acts as a reinforcing additive for polymers to increase strength and stiffness and to improve stability to heat.

According to another embodiment, the base plate may be formed of a metallic sheet with an electrical insulation layer. For example, the metallic sheet may be formed of aluminum or steel and the electric insulation layer may be a polymeric coating such as an organic or inorganic resin. Sheets can be rolled and coated with the electrically insulating layer in an endless process, which reduces the manufacturing costs.

According to another embodiment, which may be combined with one or more of the before mentioned embodiments, the spacer further comprises:
- a plurality of third protrusions protruding from the plane of the base plate at the first side, wherein each of the third protrusions coincides with a depression on the second side, and
- a plurality of fourth protrusions protruding from the plane of the base plate at the second side, wherein each of the fourth protrusions coincides with a depression on the first side.

Each of the fourth protrusions directly surrounds one corresponding third protrusion. In other words, the spacer elements do show exactly the same structure as the spacer element including the first and second protrusion except that the ring-shaped fourth protrusion and the ring-shaped first protrusion are positioned on opposite sides if the base plate, respectively the dimple-shaped third protrusion and the dimple-shaped second protrusion are also positioned on opposite sides of the base plate. If the number of spacer elements having a different orientation of the ring-shaped or dimple-shaped protrusions is equal or substantial equal, the contact areas of the ends of the spacer elements which rest upon the side surfaces of the battery cells are equal or at least substantial equal. The thermal exchange surface will therefore be the same on both sides of the spacer. Of course, the third and fourth protrusions may be modified in the same manner as defined above for the first and second protrusions.

A battery cells stack for an electric vehicle may thus comprise a plurality of prismatic battery cells, and at least one spacer which is interposed between two battery cells of the battery cells stack. Preferably, spacers are assembled between each of the battery cells of the battery cells stack.

### Specific Embodiments

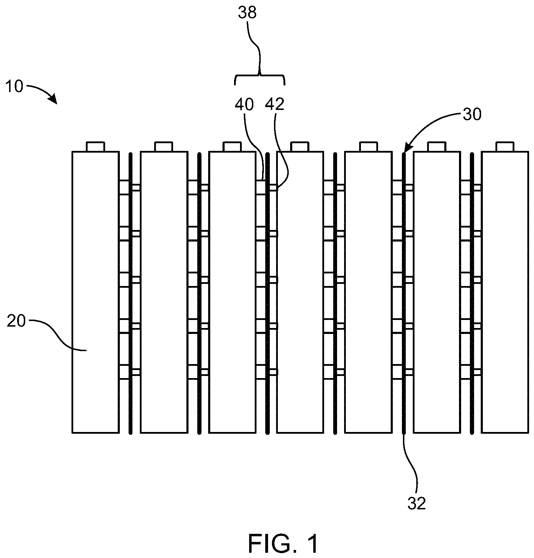

Fig. 1 is a side view illustrating a battery cells stack 10 according to an exemplary embodiment of the present disclosure. The battery cells stack 10 may be part of a battery module, respectively a battery pack including several battery modules for propulsion of an electric vehicle (not shown in the figure). The highly simplified battery cells stack 10 comprises a plurality of prismatic battery cells 20, for example lithium secondary batteries. A spacer 30 is positioned between each of the plurality of battery cells 20. The spacer 30 comprises a base plate 32 and a plurality of spacer elements 38, each including a first protrusions 40 and a second protrusions 42 protruding from opposite sides of the base plate 32.

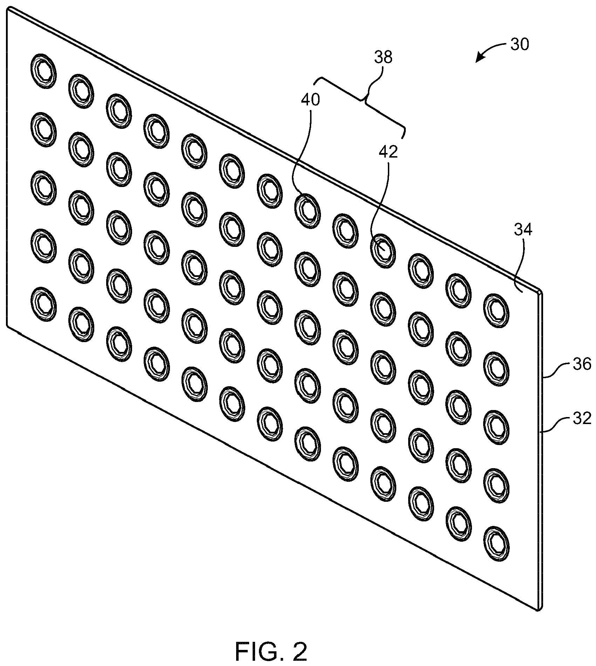

Figure 2 shows an exemplary embodiment of the spacer 30, which may be interposed between the battery cells 20 of the battery cells stack 10 of Figure 1. The spacer 30 comprises the base plate 32 with a first side 36 and a second side 34 opposed to the first side 36. The plurality of ring-shaped first protrusions 40 protrudes from a plane of the base plate 32 at the first side 36, wherein each of the first protrusions 40 coincides with a depression on the second side 34.

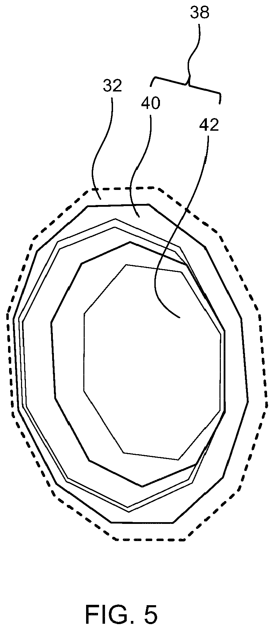

Further, a plurality of dimple-shaped second protrusions 42 protrudes from the plane of the base plate 32 at the second side 34, wherein each of the second protrusions 42 coincides with a depression on the first side 36 (not shown). Each of the ring-shaped first protrusions 40 directly surrounds one corresponding dimple-shaped second protrusion 42. Here, the first protrusions 40 and the second protrusions 42 have a circular shape. One first protrusion 40 and one second protrusion 42 thus forms the spacer element 38 which extends out of the plane of the base plate 32 on both sides 34, 36 of the base plate 32. A sectional illustration through an exemplary single spacer element 38 is shown in Figure 5. The plurality of spacer elements 38 is assembled in a predetermined pattern, for example in five rows, each including thirteen spacer elements 38. The spacer 30 is formed of an electrically non-conductive material, for example a fiber-reinforced polymer composite or may be a mica plate. Specifically, the spacer 30 according to the illustrated embodiment may be a one-piece component.

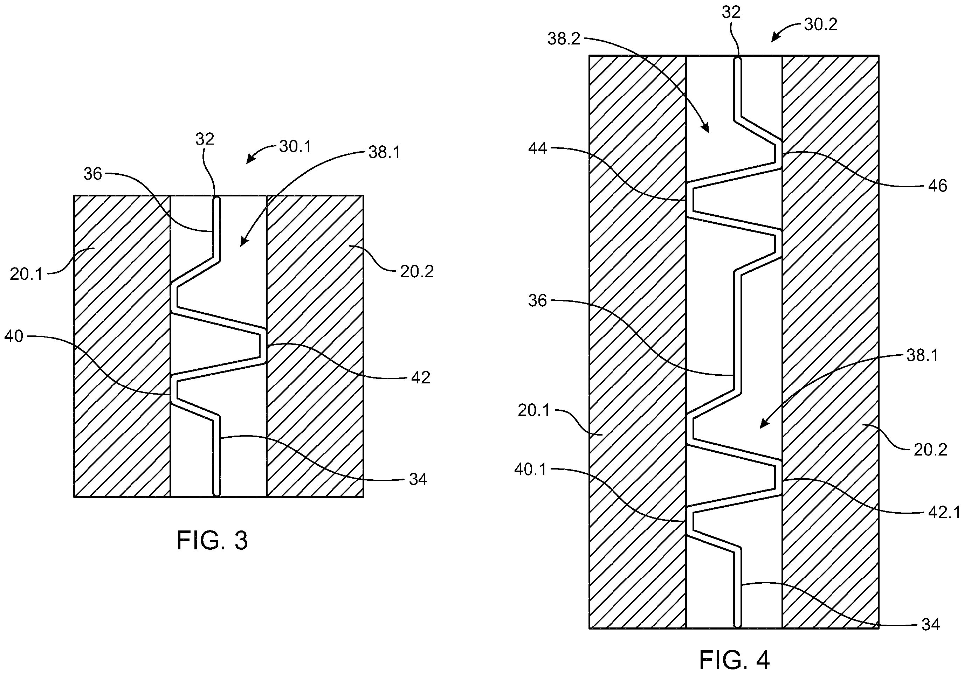

Figure 3 schematically illustrates a sectional view along a part of a spacer 30.1 bearing a spacer element 38.1 according to an embodiment. More precisely, the sectional view is a cut through the single spacer element 38.1 of the spacer 30.1, but the spacer 30.1 will include a plurality thereof. Furthermore, Figure 3 shows parts of the two adjacent battery cells 20.1 and 20.2 between which the spacer 30.1 is interposed. As can be seen from the drawing, the ring-shaped first protrusion 40 extends from the first side 36 of the base plate 32 towards the first battery cell 20.1, whereas the dimple-shaped second protrusion 42 extends from the second side 34 of the base plate 32 towards the second battery cell 20.2. The first protrusion 40 coincides with a depression on the second side 34, whereas the second protrusion 42 coincides with a depression on the first side 36. Only the end of the ring-shaped first protrusion 40 contacts the longitudinal side surface of the first battery cell 20.1. In the same manner, only the end of the dimple-shaped second protrusion 42 contacts the longitudinal side surface of the second battery cell 20.2. In other words, the base plate 32 does not directly rest against a surface of the adjacent battery cells 20.1 and 20.2 and there is a gap on both sides 34, 36 of the base plate 32 towards the battery cells 20.1 and 20.2.

In case the temperature in battery cell 20.2 increases, heat may be only transferred via the spacer element 38.1 of the spacer 30.1 to the first battery cell 20.1 starting from the small contact area at the end of the second protrusion 42 through the conical-shaped wall towards the small contact area at the end of the first protrusion 40. Thereby, the possible heat path for heat transfer between the adjacent battery cells 20.1, 20.2 is minimalized. Also, the mentioned gaps between the base plate 32 and the battery cells 20.1, 20.2 may be used for active cooling with a cooling medium. Thus, thermal insulation is greatly improved. Furthermore, the spacer element 38.1 may act as a spring and compensate swelling of the battery cells 20.1, 20.2. In this respect, reference is made to the above description.

Figure 4 schematically illustrates a cross-sectional view through a section of a spacer 30.2 according to another embodiment. Here, the spacer 30.2 includes two differently orientated spacer elements 38.1 and 38.2. On the right side of the sectional view, a first spacer element 38.1 is positioned which equals the spacer element 38.1 of Figure 3. A second spacer element 38.2 is illustrated on the left side of the sectional view. The second spacer element 38.2 includes a dimple-shaped third protrusions 44 protruding from the plane of the base plate 32 at the first side 36, wherein the third protrusion 44 coincides with a depression on the second side 34. Further, a ring-shaped fourth protrusions 46 protrudes from the plane of the base plate 32 at the second side 34, wherein the fourth protrusions 46 coincides with a depression on the first side 36. The ring-shaped fourth protrusion 46 directly surrounds the corresponding dimple-shaped third protrusion 44. In other words, the ring-shaped protrusion 46 of the second spacer element 38.2 and the ring-shaped protrusion 40.1 of the first spacer element 38.1 are provided on opposite sides of the base plate 32 and the same applies to the dimple-shaped protrusion 44 of the second spacer element 38.2 and the dimple-shaped protrusion 42.1 of the first spacer element 38.1. The spacer 30.2 will include a plurality of first and second spacer elements 38.1 and 38.2, each with a substantially equal number and distribution across the base plate 32.

Due to such an arrangement of the first and second spacer elements 38.1 and 38.2, the mechanic and thermal characteristics will be substantially similar on both sides of the base plate 32.

Figure 5 illustrates a spacer element 38 according to an embodiment of the present disclosure.

The spacer element 38 could be used, for example, in the spacer 30 shown in Figure 2. The spacer element 38 includes a ring-shaped first protrusion 40 as well as a dimple-shaped second protrusion 42 exceeding in different direction out of the plane of the base plate 32.

A diameter of the ring-shaped first protrusion 40 may be 10 mm (measured from the outer rim of the first protrusion 40) and a height of the first protrusion 40 may be 1.5 mm measured from the plane of base plate 32. A diameter of the dimple-shaped second protrusion 42 may be 7 mm and a height of the second protrusion 42 may be 1.4 mm measured from the surface of base plate 32. The base plate 32 may have a thickness of 0.3 mm.

### Reference signs

- 10: battery cells stack
- 20, 20.1, 20.2: battery cell(s)
- 30, 30.1, 30.2: spacer
- 32: base plate
- 34: second side of the base plate 32
- 36: first side of the base plate 32
- 38, 38.1, 38.2: spacer element(s)
- 40, 40.1: first protrusion
- 42,42.1: second protrusion
- 44: third protrusion
- 46: fourth protrusion

## Claims

1. A spacer (30) for spacing battery cells (20) from each other in a battery cells stack (10), the spacer (30) comprising:
a base plate (32) comprising a first side (36) and a second side (34) opposed to the first side (34),
a plurality of first protrusions (40) protruding from a plane of the base plate (32) at the first side (36), wherein each of the first protrusions (40) coincides with a depression on the second side (34), and
a plurality of second protrusions (42) protruding from the plane of the base plate (32) at the second side (34), wherein each of the second protrusions (42) coincides with a depression on the first side (36),
wherein each of the first protrusions (40) directly surrounds one corresponding second protrusion (42).

2. The spacer (30) of claim 1, wherein the first protrusions (40) and the second protrusions (42) have a circular shape.

3. The spacer (30) of claim 2, wherein the first protrusions (40) have a diameter in the range of 8 to 15 mm and/or the second protrusions (42) have a diameter in the range of 5 to 10 mm.

4. The spacer (30) of one or more of the preceding claims, wherein the first protrusions (40) and the second protrusions (42) are integrally formed with the base plate (32).

5. The spacer (30) of one or more of the preceding claims, wherein the first protrusions (40) and the second protrusions (42) protrude out of the plane of the base plate (32) by 0.5 to 2 mm.

6. The spacer (30) of one or more of the preceding claims, wherein the base plate (32) has a thickness in the range of 0.1 to 1.2 mm.

7. The spacer (30) of one or more of the preceding claims, wherein the base plate (32) is formed of an electrically non-conductive material.

8. The spacer (30) of claim 7, wherein the base plate (32) is formed of a fiber-reinforced polymer composite or is a mica plate.

9. The spacer (30) of one or more of the preceding claims, wherein the spacer (30.1) further comprises:
a plurality of third protrusions (44) protruding from the plane of the base plate (32) at the first side (36), wherein each of the third protrusions (44) coincides with a depression on the second side (34), and
a plurality of fourth protrusions (46) protruding from the plane of the base plate (32) at the second side (34), wherein each of the fourth protrusions (46) coincides with a depression on the first side (36),
wherein each of the fourth protrusions (46) directly surrounds one corresponding third protrusion (44).

10. A battery cells stack (10) for an electric vehicle, the battery cells stack (10) comprising:
a plurality of prismatic battery cells (20), and
at least one spacer (30) as defined in one or more of the preceding claims, the spacer (30) being interposed between two battery cells (20) of the battery cells stack (10).
